# EUROPÄISCHE PATENTSCHRIFT

(11) **EP 2 424 772 B1**
(45) Veröffentlichungstag und Bekanntmachung des Hinweises auf die Patenterteilung: **24.12.2014**
(21) Anmeldenummer: 10716491.5
(22) Anmeldetag: 23.04.2010
(51) Int. Cl.: B62D 65/02, B62D 65/18

(54) **ANLAGE ZUR MONTAGE VON KAROSSERIETEILEN**
INSTALLATION FOR MOUNTING BODY PARTS
INSTALLATION DE MONTAGE DE PIÈCES DE CARROSSERIE

(30) Priorität: 02.05.2009 DE 102009019741
(43) Veröffentlichungstag der Anmeldung: 07.03.2012
(73) Patentinhaber: ThyssenKrupp System Engineering GmbH, 74076 Heilbronn (DE)
(72) Erfinder: STEIN, Hans, 09337 Hohenstein-Ernstthal (DE); SCHULZE, Jens, 09217 Burgstädt (DE); GEBAUER, Wolfgang, 08066 Zwickau (DE)
(74) Vertreter: Loock, Jan Pieter
(86) Internationale Anmeldenummer: PCT/EP2010/002528
(87) Internationale Veröffentlichungsnummer: WO 2010/127779

(56) Entgegenhaltungen:
- EP-A1- 0 411 517
- EP-A2- 1 541 455
- US-A- 4 488 493
- US-A1- 2001 017 094

## Beschreibung

Die Erfindung betrifft eine Anlage zur Montage von Fahrzeugkarosserieteilen gemäß dem Oberbegriff der unabhängigen Patentansprüche.

Aus dem Stand der Technik, siehe z.B der US 4 488 493, sind Anlagen bekannt, die entlang einer Förderlinie eine oder mehrere zentrale stationäre Bearbeitungsstationen (z.B. (Geometrie-)Schweißstationen) aufweisen, denen entlang der Förderlinie über einen Karosserieförderer ein zentrales Karosserieteil in Form eines Karosseriegerüsts zugeführt wird und denen abseits der Förderlinie, von der Seite, in Spannrahmen gehaltene weitere Karosserieteile (wie Karosserieseitenwände) zugeführt werden. Dabei werden die Spannrahmen abseits der Bearbeitungsstation in so genannten Beladungs- oder Bestückungsstationen mit entsprechenden Karosserieteilen bestückt und die bestückten Spannrahmen der Bearbeitungsstation über Transportsysteme in Form von bodenseitig oder hängend ausgeführten Spannrahmenzuführsystemen der Bearbeitungsstation zugeführt. Im Bereich der Bearbeitungsstation werden die Karosserieteile über Zuführ- und Positioniereinrichtungen dem Spannrahmen entnommen und dem in der zentralen Bearbeitungsstation positionierten zentralen Karosserieteil zugeführt. Sobald die Karosserieteile korrekt gegeneinander ausgerichtet sind kann das zugeführte Karosserieteil mit dem zentralen Karosserieteil über Schweißroboter verbunden (gefügt) werden.

Aus der DE 199 17 908 A1 ist eine Anlage für den flexiblen Zusammenbau von Kraftfahrzeugkarosserien bekannt, bei der ein Spannrahmen über zwei Laufwagen (wobei zumindest ein Laufwagen einen eigenen Antrieb aufweist) in einer hängenden und abschnittsweise bogenförmig ausgebildeten Ringbahn zwischen einer Beladungsstation, in der die Spannrahmen bestückt werden, und einer Bearbeitungsstation, in der die Spannrahmen (bzw. das von dem jeweiligen Spannrahmen getragene Werkstück) der Bearbeitungsstation zugeführt und dort mit dem zentralen Karosserieteil gefügt werden, umläuft.

Ferner ist aus der EP 0 583 282 B1 eine Bearbeitungsstation für Fahrzeugkarosserien bekannt, bei der eine Transportvorrichtung vorgesehen ist, welche bestückte Spannrahmen in einer Ebene parallel zu einer Transfer- bzw. Förderlinie zwischen einem Spannrahmenmagazin und einer quer dazu anordenbaren Zustellvorrichtung hin und her bewegt. Dabei ist das Spannrahmenmagazin um eine horizontale oder ein vertikale Achse in Form eines rotierbaren Tromrnelgestells ausgebildet, welches in einer Ruhestellung jeweils einen Spannrahmen in einer parallel zur Transferlinie sich erstreckenden Ebene hält. Ausgehend von dieser Ruhestellung wird der parallel zur Transferlinie vorgehaltene Spannrahmen über eine Transportvorrichtung parallel zur Transferlinie der Arbeitsstation zugeführt. Die Transportvorrichtung umfasst Schleppeinrichtungen für die Bewegung der Spannrahmen entlang von (unteren (bodenseitigen) und oberen) Führungen.

In der EP 0 296 369 B1 ist eine Vorrichtung zum automatischen Fördern von Spannrahmen zwischen einer Wartestation und einer Arbeitsstation beschrieben, bei welcher die Spannrahmen in parallel zu einer Transferlinie für das zu bearbeitende Werkstück angeordneten Führungen verschiebbar und im Bereich der Arbeitsstation in quer zur Transferlinie vertaufenden Schienen aus der Verschiebestellung in eine Arbeitsstellung bewegbar sind.

Der Erfindung liegt die Aufgabe zugrunde, eine Anlage zur Montage von Fahrzeugkarosserien bereitzustellen, bei der die Mittel für den Transport von mit Fahrzeugteilen bestückbaren Spannrahmen zu einer zentralen Arbeits- oder Bearbeitungsstation auf andere Weise als im Stand der Technik beschrieben und in besonders platzsparender Bauweise ausgeführt sind. An der Bearbeitungsstation der Anlage sollen dabei unterschiedliche Spannrahmen (z.B. verschiedene Spannrahmen für unterschiedliche Fahrzeugtypen oder - derivate) bereitgestellt beziehungsweise eine einfache Bauteilzuführung gewährleistet werden, wobei ein möglichst flexibler Austausch der Spannrahmen beziehungsweise eine möglichst einfache Neubestückung der Spannrahmen gewährleistet werden soll.

Erfindungsgemäß wird diese Aufgabe durch die Gesamtheit der Merkmale der unabhängigen Patentansprüche gelöst. Vorteilhafte Weiterbildungen der Erfindung sind Bestandteil der jeweiligen Unteransprüche.

Im Rahmen der Erfindung wird eine neuartige Vorrichtung zum Wechseln, Bestücken oder Umbauen von Spannrahmen in sog. Framingstationen vorgeschlagen. Diese Anlage bzw. Vorrichtung umfasst eine zentrale Bearbeitungsstation in der einem zentralen Karosserieelement weitere Karosserieteile über sog. Spannrahmen zugeführt und diese über Arbeitsroboter an das zentrale Karosserieelement gefügt werden. Dabei werden die zuzuführenden Karosserieteile in Spannrahmen gehalten, welche mit Hilfe von Transportmitteln an die Bearbeitungsstation gefahren werden. Die die Spannrahmen tragenden Transportmittel werden dabei über eine bodenseitig angeordnete Schienenführung an die Bearbeitungsstation geführt. Dabei weist jedes Transportmittel eines Spannrahmens zumindest zwei beabstandete Fahrwerke auf, wobei zumindest eines der Fahrwerke eine insbesondere automatisch steuerbare Antriebseinrichtung (beispielsweise in Form eines elektrischen Motors, wie einem Nabenmotor oder dergleichen) aufweist. In einer ersten Ausführungsform der Erfindung ist das Transportmittel als in seiner Länge variierbarer Transportwagen (sog. Teleskopwagen) ausgebildet und jedes ihm zugeordnete Fahrwerk drehbeweglich gelagert. Dies hat insbesondere den Vorteil, dass bei einer Schienenführung die zumindest zwei im Wesentlichen rechtwinklig zueinander angeordnete Schienenteile umfasst, wobei jedes Fahrwerk des Transportwagens ausschließlich einem Schienenteil zugeordnet ist und auf diesem beweglich verfahrbar ist, ein äußerst platzsparender Transport von Spannrahmen aus einer abseits der Bearbeitungsposition angeordneten Beladungsstation für die Spannrahmen in eine im Wesentlichen parallel zur Bearbeitungsstation befindlichen Montage- oder Bearbeitungsposition verfahrbar ist.

In einer zweiten nicht beanspruchten Ausführungsform weist die Anlage analog zur ersten Ausführungsform eine zentrale Bearbeitungsstation sowie einen über ein Transportmittel verfahrbaren Spannrahmen und ein Schienensystem bzw. eine Schienenführung zur Führung des Transportmittels auf, wobei die Schienenführung zweiwinklig, insbesondere rechtwinklig zueinander angeordnete Schienenteile umfasst, und wobei ein Fahrwerk des Transportmittels sich ausschließlich entlang dem einen Schienenteil und das andere Fahrwerk sich ausschließlich entlang dem anderen Schienenteil bewegt. Auch gemäß dieser Ausführungsform kann das Transportmittel als in seiner Länge variierbarer Transportwagen (Teleskopwagen) ausgebildet sein. Gemäß beiden Ausführungsformen ist die Schienenführung mit Vorteil derart ausgebildet, dass die zumindest zwei separaten Schienenteile sich nicht berühren bzw. kreuzen sondern zumindest geringfügig voneinander beabstandet und im Wesentlichen rechtwinklig zueinander angeordnet sind. Ebenfalls beiden Ausführungsformen gemein ist, dass jedes der Fahrwerke eine separate Antriebseinrichtung aufweisen kann.

Schließlich ist auch ein nicht erfindungsgemäßer Transportwagen für die Verwendung in einer erfindungsgemäßen Anlage beschrieben, wobei der transportwagen sich dadurch auszeichnet, das er in seiner axialen Länge variierbar ausgebildet ist, ihm zwei von einander beabstandete Fahrwerke zugeordnet sind, wobei zumindest eines der Fahrwerke einen eigenen Antrieb aufweist und jedes der beiden Fahrwerke drehbeweglich am Transportwagen gelagert ist.

Weitere Vorteile, Besonderheiten und zweckmäßige Weiterbildungen der Erfindung ergeben sich aus den Unteransprüchen und der Beschreibung der nachfolgenden Zeichnungsfiguren bevorzugter Ausführungsbeispiele.

Es zeigen:
- Fig. 1: eine erfindungsgemäße Anlage zur Montage einer Fahrzeugkarosserie gemäß einer ersten Ausführungsform in schematischer Draufsicht,
- Fig. 2: eine Anlage gemäß Fig. 1 bei der der als Teleskopwagen ausgebildete Transportwagen auf eine kurze Länge eingezogen (bzw. eingeschoben) und somit aus dem Bereich der Bearbeitungsstation herausgeführt wird,
- Fig. 3: eine Anlage gemäß den Fig. 1 und 2 bei der der als Teleskopwagen ausgebildete Transportwagen im eingezogenen Zustand aus einer in der Draufsicht gesehen parallelen Lage zur Förderlinie der Bearbeitungsstation in eine im Wesentlichen senkrecht zur Förderlinie ausgerichtete Position bewegt wird, und
- Fig. 4: eine Weiterbildung der erfindungsgemäßen Anlage gemäß den Fig. 1 und 3 bei der eine aus drei Schienenteilen bestehende Schienenführung die mit insgesamt zwei Transportwagen bestückt ist, dargestellt ist.

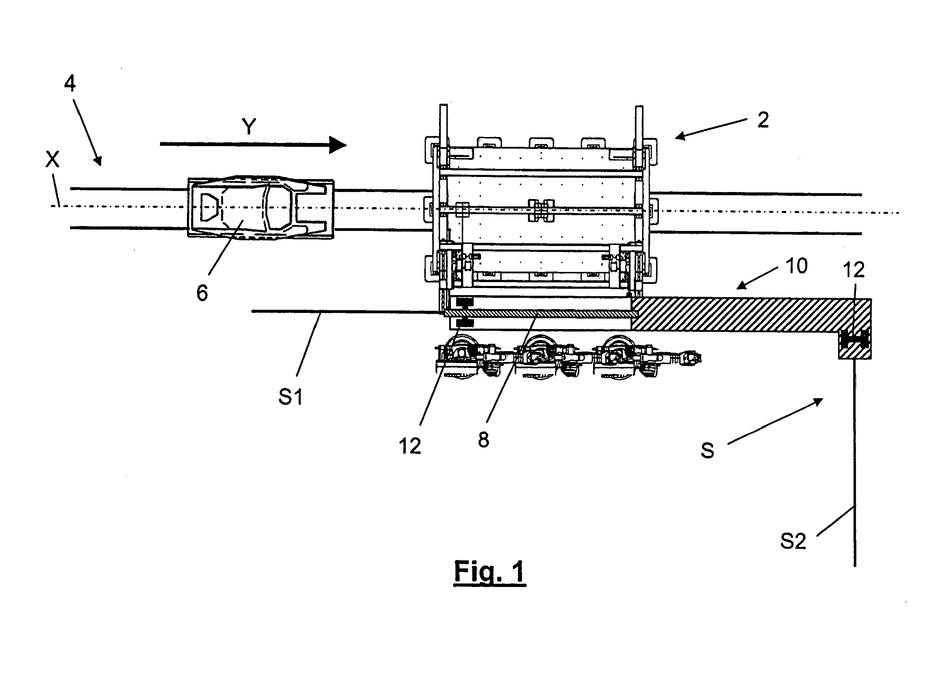

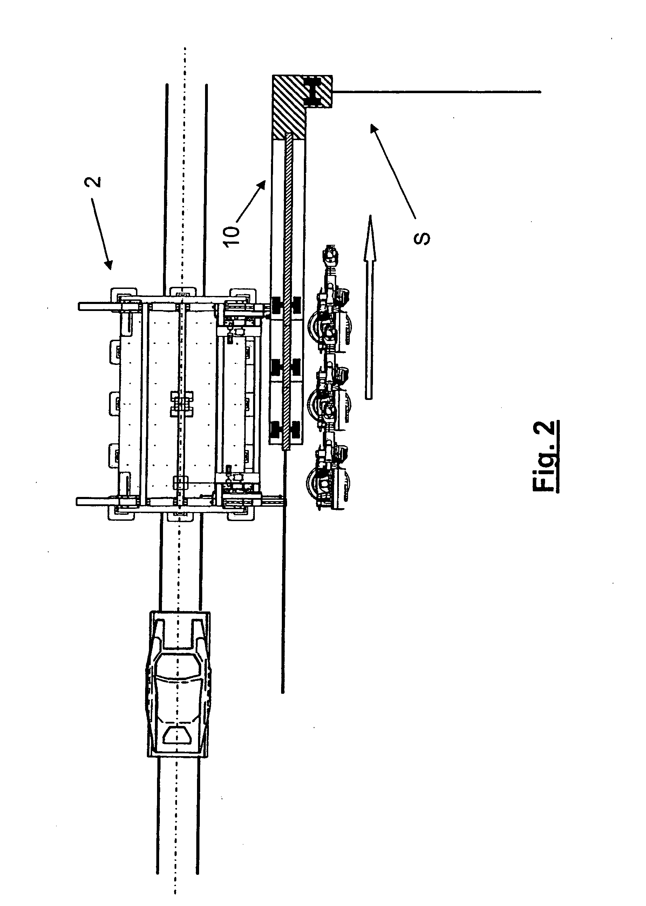

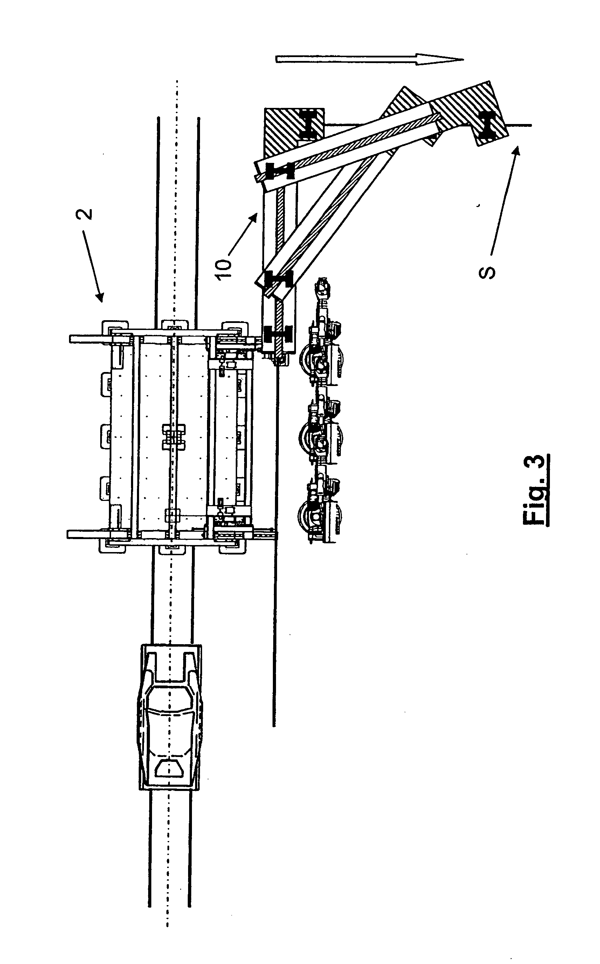

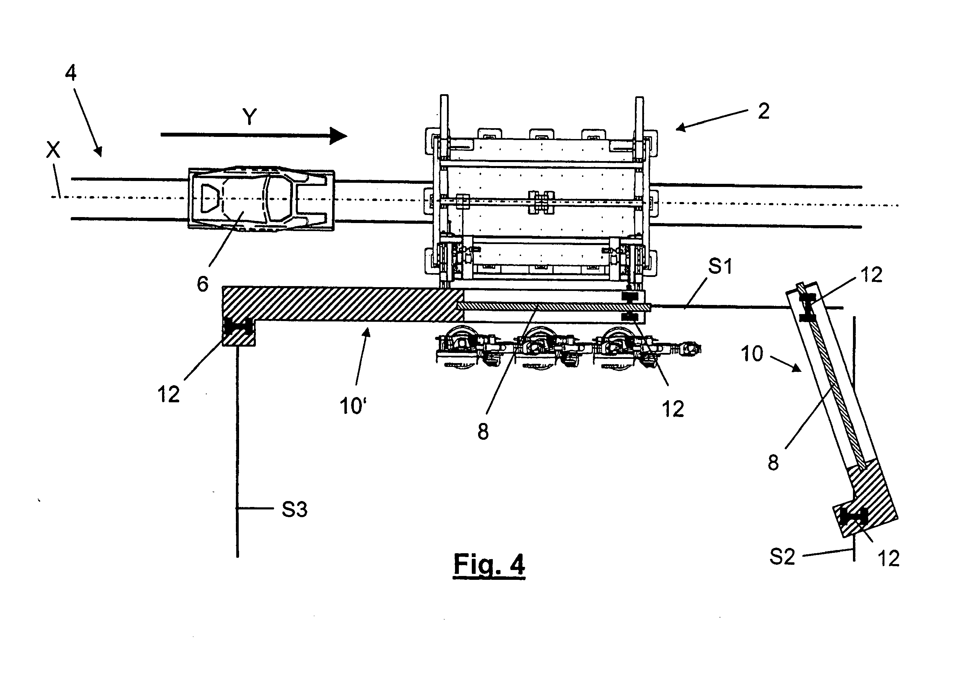

In Fig. 1 ist eine erfindungsgemäße Anlage zur Montage einer Fahrzeugkarosserie dargestellt, die im Wesentlichen eine zentrale Arbeits- bzw. Bearbeitungsstation 2 aufweist, der über eine Karosseriefördereinrichtung 4 entlang einer im Wesentlichen gradlinig verlaufenden Förderlinie X in Förderrichtung Y ein zu bearbeitendes bzw. zu montierendes zentrales Karosserieteil 6 (Karosseriegerüst) zuführbar ist. Des Weiteren umfasst die Anlage eine Schienenführung S mit zumindest zwei im Wesentlichen rechtwinklig zueinander angeordneten separaten Schienenteilen S1 und S2. Ein auf den Schienenteilen S1, S2 verfahrbarer Transportwagen 10, der einen Spannrahmen 8 trägt, ist gemäß Fig. 1 in einer sog. Arbeitsposition dargestellt in welcher der bestückte Spannrahmen 8 ein an das zentrale Karosserieteil 6 zu fügendes weiteres Karosserieteil der Bearbeitungsstation 2 zuführt. Dabei kann das weitere Karosserieteil über eine nicht dargestellte und in herkömmlicher Weise ausgeführte Zuführeinrichtung aus dem Spannrahmen 8 gelöst und der Bearbeitungsstation 2 zum Fügen an das zentrale Karosserieteil 6 zugeführt werden. Der Transportwagen 10 ist gemäß der Erfindung als ein sog. Teleskopwagen der in seiner Länge variierbar ausgebildet ist ausgeführt. Mit Vorteil weist der Transportwagen 10 an beiden Enden jeweils ein Fahrwerk 12 auf. Dabei ist jedes Fahrwerk 12 genau einem Schienenteil S1, S2 zugeordnet derart, dass das eine Fahrwerk 12 über einen ersten bordeigenen Antrieb ausschließlich auf dem einen Schienenteil S2 und das andere Fahrwerk 12 über einen zweiten bordeigenen Antrieb ausschließlich auf dem anderen Schienenteil S1 verfahrbar geführt ist. Mit Vorteil sind die beiden Schienenteile S1, S2 derart zueinander angeordnet, dass sie sich nicht berühren bzw. kreuzen (Fig. 4). Ist das über den Spannrahmen 8 der Bearbeitungsstation 2 zugeführte weitere Karosserieteil aus dem Spannrahmen 8 entnommen, wird der Spannrahmen 8 aus der dargestellten Arbeitsposition in eine sog. Beladungsposition, wie sie in Fig. 3 dargestellt ist, überführt. Hierfür wird der ausgezogene Teleskopwagen (Fig. 1) durch den Antrieb (z.B. Elektromotor) eines Fahrwerks 12 oder über einen Mechanismus des Teleskopwagens (z.B. hydraulischer Kolben-Zylinder-Antrieb) automatisch eingezogen bzw. eingeschoben (Fig. 2) und anschließend im eingezogenen (zumindest bereichsweise eingezogenen) Zustand aus einer Position, in der er in seiner Längserstreckung im Wesentlichen parallel zur Förderlinie X ausgerichtet ist, in eine Position überführt, in der er im Wesentlichen rechtwinklig zur Arbeitsposition bzw. zur Längserstreckung der Förderlinie X ausgerichtet ist. Hierbei bewegt sich das eine Fahrwerk 12 in Längsrichtung parallel zur Förderlinie X, während sich das andere Fahrwerk 12 quer dazu (vorzugsweise in einem Winkel von zirka 90°) bewegt, so dass durch die Überlagerung der beiden linearen Bewegungen eine Schwenkbewegung des Spannrahmens 8 erfolgt. Durch den Entfall von Kurvenabschnitten (die in der Regel von beiden Fahrwerken durchfahren werden) kann eine höhere Fahrgeschwindigkeit der Fahrwerke erreicht werden. In der gemäß Fig. 3 dargestellten Beladungsposition kann der Spannrahmen 8 erneut bestückt oder aber zum Teil oder ganz gegen einen anderen Spannrahmen 8 oder gegen ein anderes Spannrahmensegment ausgetauscht werden. Aus einem nicht dargestellten Magazin in dem unterschiedliche Spannrahmen 8 und/oder Spannrahmensegmente bevorratet sind und in dem ferner weitere Karosserieteile vorgehalten werden, können die Transportwagen 10 und/oder der auf dem jeweiligen Transportwagen 10 befindliche Spannrahmen 8 entsprechend bestückt werden.

Fig. 4 zeigt eine Weiterbildung der erfindungsgemäßen Anlage in der die Schienenführung S durch drei einzelne gradlinig ausgeführte und im Wesentlichen rechtwinklig zu einer U-Form zueinander angeordnete Schienenteile S1, S2, S3 umfasst. Dabei ist der mittlere Basisschenkel S1 der U-Form im Wesentlichen parallel zur Förderlinie X angeordnet während die beiden anderen Schienenteile S2, S3 in Förderrichtung Y gesehen vor und hinter der Bearbeitungsstation 2 mit ihren freien Schenkelenden der Förderlinie X bzw. der Bearbeitungsstation 2 abgekehrt angeordnet sind. Im dargestellten Ausführungsbeispiel gemäß Fig. 4 sind insgesamt zwei Transportwagen 10, 10' dargestellt, wobei der eine Transportwagen 10 mit seinem einem Fahrwerk 12 dem Basisschenkel S1 und mit seinem anderen Fahrwerk 12, dem freien Schenkel S2 zugeordnet ist und der andere Transportwagen 10' entsprechend mit seinem einem Fahrwerk 12 ebenfalls dem Basisschenkel S1 und seinem anderen Fahrwerk 12 dem anderen freien Schenkel S3 zugeordnet ist.

### Bezugszeichenliste:

- 2: Bearbeitungsstation
- 4: Karosseriefördereinrichtung
- 6: zentrales Karosserieteil
- 8: Spannrahmen
- 10, 10': Transportwagen
- 12: Fahrwerk (Transportwagen)
- S: Schienenführung
- S1, S2, S3: erstes, zweites bzw. drittes Schienenteil
- X: Förderlinie
- Y: Förderrichtung

## Patentansprüche

1. Anlage zur Montage einer Fahrzeugkarosserie, umfassend
- eine Bearbeitungsstation (2) zur Montage und/oder Bearbeitung von Karosserieteilen, der über eine Karosseriefördereinrichtung (4) entlang einer Förderlinie (X) ein zu bearbeitendes zentrales Karosserieteil (6) zuführbar ist,
- einen Spannrahmen (8) der mit einem oder mehreren weiteren Karosserieteil(en) bestückbar ist,
- ein den Spannrahmen (8) tragendes Transportmittel (10)
- eine Schienenführung (S), über die der Spannrahmen (8) mittels dem Transportmittel (10) verfahrbar ist,
- sowie zumindest zwei voneinander beabstandete, mit der Schienenführung (S) zusammenwirkende und dem Transportmittel (10) zugeordnete Fahrwerke (12), wobei zumindest eines der Fahrwerke (12) eine Antriebseinrichtung aufweist,
- wobei das Transportmittel (10) als in seiner Länge variierbarer Transportwagen ausgebildet und jedes ihm zugeordnete Fahrwerk (12) drehbeweglich gelagert ist,
**dadurch gekennzeichnet, dass** - die Schienenführung (S) zumindest zwei winklig zueinander angeordnete
Schienenteile (S1, S2) umfasst,
- wobei ein Fahrwerk (12) des Transportwagens (10) sich ausschließlich entlang dem im Wesentlichen parallel zur Förderlinie (X) verlaufenden Schienenteil (S1) und das andere Fahrwerk (12) sich ausschließlich entlang dem anderen Schienenteil (S2; S3) bewegt.

2. Anlage nach Anspruch 1, **dadurch gekennzeichnet, dass** die Schienenteile (S1, S2) rechtwinklig zueinander angeordnet sind.

3. Anlage nach Anspruch 1, **dadurch gekennzeichnet, dass**
- die Schienenführung (S) zumindest drei in U-Form angeordnete Schienenteile (S1, S2, S3) umfasst, wobei sich der mittige Basis-Schienenteil (S1) der U-Form im Wesentlichen parallel zur Förderlinie (X) erstreckt.

4. Anlage nach einem der vorstehenden Ansprüche, **dadurch gekennzeichnet, dass**
- die Schienenteile (S1, S2; S1, S2, S3) beabstandet zueinander angeordnet sind, derart, dass kein Berührungspunkt bzw. keine Stoßverbindung oder Kreuzung zwischen einzelnen Schienenteilen (S1, S2; S1, S2, S3) existiert.

5. Anlage nach einem der vorstehenden Ansprüche, **dadurch gekennzeichnet, dass** -jedes der Fahrwerke (12) eine separate eigene Antriebseinrichtung aufweist.

## Claims

1. Installation for mounting a vehicle body, comprising
- a machining station (2) for mounting and/or machining body parts, to which a central body part (6) which is to be machined can be guided by means of a vehicle body conveying device (4) along a conveyor line (X),
- a tensioning frame (8) which can be fitted with one or more body parts,
- transport means (10) which support the tensioning frame (8),
- a rail guide (S), which enables the tensioning frame (8) to be moved by the transport means,
- as well as at least two bearing mechanisms (12) which are associated with the transport means (10), which interact with the rail guide (S) and which are arranged at a distance from each other, wherein at least one of the bearing mechanisms (12) comprises a drive device,
- wherein the transport means (10) are designed as a transport carriage, the length thereof being changeable
- and each bearing mechanism (12) which is associated with the transport means being
rotationally mounted,
**characterised in that**
- the rail guide (S) comprises at least two rail parts (S 1, S2) which are arranged at an angle to each other,
- wherein a bearing mechanism (12) of the transport means (10) moves exclusively along the rail part (S1) which runs essentially parallel to the conveyor line (X) and the other bearing mechanism (12) moves exclusively along the other rail part (S2; S3).

2. Installation according to claim 1, **characterised in that** the rail parts (S 1, S2) are arranged at right angles to each other.

3. Installation according to claim 1, **characterised in that**
- the rail guide (S) comprises at least three rail parts (S1, S2, S3) arranged in a U shape, wherein the central basic rail part (S1) of the U shape extends essentially parallel to the conveyor line (X).

4. Installation according to one of the preceding claims, **characterised in that**
- the rail parts (S1, S2; S1, S2, S3) are arranged at a distance from each other in such a way that no contact point or butt joint or intersection exists between individual rail parts (S1, S2; S1, S2, S3).

5. Installation according to one of the preceding claims, **characterised in that**
- each of the bearing mechanism (12) comprises its own separate drive device.

## Revendications

1. Installation de montage d'une carrosserie de véhicule, comprenant
- un poste de traitement (2) pour le montage et/ou le traitement de pièces de carrosserie, vers lequel une pièce de carrosserie centrale à traiter (6) peut être acheminée à l'aide d'un dispositif de transport de carrosserie (4) le long d'une chaîne de convoyage (X),
- un cadre de serrage (8) qui peut être chargé d'une ou plusieurs autres pièces de carrosserie,
- un moyen de transport (10) portant le cadre de serrage (8),
- un guide à rails (S) sur lequel le cadre de serrage (8) peut être déplacé à l'aide du moyen de transport (10),
- ainsi qu'au moins deux trains de roulement (12) espacés l'un de l'autre, coopérant avec le guide à rails (S), coopérants et associés au moyen de transport (10), où au moins un des trains de roulement (12) présente un dispositif moteur,
- où le moyen de transport (10) se présente sous la forme d'un chariot de transport de longueur variable
- et chaque train de roulement (12) qui lui est associé a des paliers mobiles en rotation, **caractérisée en ce que**
- le guide à rails (S) comprend au moins deux pièces de rail (S1, S2) disposées en angle l'une par rapport à l'autre,
- où un train de roulement (12) du chariot de transport (10) se déplace exclusivement le long de la pièce de rail (S1) s'étendant sensiblement parallèlement à la chaîne de convoyage (X) et l'autre train de roulement (12) exclusivement le long de l'autre pièce de rail (S2; S3).

2. Installation selon la revendication 1, **caractérisée en ce que** les pièces de rail (S 1, S2) sont disposées orthogonalement l'une par rapport à l'autre.

3. Installation selon la revendication 1, **caractérisée en ce que**
- le guide à rails (S) comprend au moins trois pièces de rail disposées en forme de U (S 1.
S2, S3), la pièce de rail centrale de base (S1) en forme de U s'étendant sensiblement parallèlement à la chaîne de convoyage (X).

4. Installation selon une des revendications précédentes, **caractérisée en ce que**
- les pièces de rail (S1, S2; S1, S2, S3) sont disposées espacées les unes des autres de manière à ce qu'il n'existe aucun point de contact, ni de liaison bout à bout, ni de croisement entre les pièces de rails individuelles (S1, S2; S1, S2, S3).

5. Installation selon une des revendications précédentes, **caractérisée en ce que** chacun des trains de roulement (12) présente un dispositif moteur propre séparé.
